# EUROPEAN PATENT APPLICATION

(11) **EP 2 182 482 A1**
(43) Date of publication of application: **05.05.2010**
(21) Application number: 09174763.4
(22) Date of filing: 02.11.2009
(51) Int. Cl.: G06Q 40/00

(54) **Method and system for representing financial information in a gaming environment**

(30) Priority: 02.11.2008 US 263476
(71) Applicant: Tradonomi Ltd., Road Town Tortola (VG)
(72) Inventor: Assia, Johnathan, Savion (IL); Assia, Ronen, Savion (IL); Ring, David, Tel Aviv (IL)
(74) Representative: Betten & Resch

(57) **Abstract**

Disclosed is an apparatus, method and system for procuring and analyzing information regarding the financial markets. According to further embodiments of the present invention, there may be provided a system to execute financial transactions using Internet-based frontend graphics that resembles wagering games. The system may provide a comprehensive combination of financial information and transactions in a format that facilitates known and new casino/betting like frontend graphics.

## Description

### FIELD OF THE INVENTION

The present invention generally relates to a combination of on-line financial trading and on-line gaming, and in particular to a method and system for representing financial and securities information and financial transactions in a gaming environment.

### BACKGROUND OF THE INVENTION

Today's financial on-line trading evolved over the last 10 years from traditional brokerage houses. With the rapid development and popularity of the internet, growth of electronic online trading has been extraordinary. Nevertheless the interface of the various trading platforms has generally remained unchanged over the last years and relies for the most part on the same tools that have been available in an offline format. Some on-line trading also incorporates several technical analytical tools that are generally displayed upon a simple time-line price/volume graph. Some research advancements have been made in the field of visualizing stock market data, but to this date none of it has had significant impact on the way trading works.

Speculative day trading represents a significant share of the whole trading industry. The online trading market offers various financial instruments such as stocks, foreign exchange, bonds and long-term securities and various forms of option trading. Each of these tools has several multi-billion market leaders (e.g., E-trade, Ameritrade®, Charles Schwab®, etc.).

On-line trading platforms offer the users exact financial information on securities or derivatives and tools to create specific transactions upon the underlying security. These tools are generally implemented as dynamic Web-sites or downloadable software.

The transactions are in the form of buy/sell orders related to a specific security that the user queries, and can have several purely financial parameters such as stop/loss, margin, short sell etc.

The foreign exchange market (also called "forex") is the largest and most dynamic market. Nearly 1.8 Trillion dollars are traded everyday. In the foreign exchange market, the on-line retail brokers have been increasing market share in the overall daily turnover.

Forex brokers are firms that deal in foreign exchange. The foreign exchange market is quite similar to the equity markets, except that typical forex brokers do not charge a commission and are required to hold a special license. Forex brokers earn money from the spread (also called "pip"). The spread is the difference between the prices at which a currency is bought and sold. A pip is the smallest price increment in a currency, For example, in Euro/US Dollar (EUR/USD), a move from 0.9008 to 0.9009 is one pip. In US Dollar/Japanese Yen (USD/JPY), a move from 127.41 to 127.42 is one pip. Several leading foreign exchange brokers also offer software interfaces to automate trading, including ONADA and Gain capital.
Today's online gaming industry has arisen mostly in the last 5 years. The gaming industry is divided into several market segments:
1. Classic casino games such as roulette, slot machines, black jack, etc. (i.e. - Market Leader Casino-on-net, www.888.com)
2. Betting on various sport events.
3. Skilled and semi-skilled games such as Poker, chess and backgammon; (i.e. - Market Leader PartyGaming)
4. New games.

On-line Casino games offer the user the opportunity to play a game over the Internet. The user interface consists of games such as horse racing, slot machines, roulette and card games. All these games depend on random variables (excluding sport betting). The user can play the game and the game outcome will be determined using a computer based algorithm to select a random outcome of the game. The algorithm (also known as Random Numbers Generator) usually has fixed odds to determine the Payoff of the gamer (and the gain of the house). For example, the slot machines algorithm can determine that the overall return to gamers will be 95% of all the bets, so the house will earn 5% of all the bets.

The graphic user interface (GUI) of these games does not necessarily depend on the random algorithm or the game outcome. For example a roll of the dice can be in a fixed manner, where only the last frame of the dice roll will represent the outcome of the random algorithm.

Although both the gaming and the trading industry rely in part on speculation, they hold uniquely different characteristics:
1. Trading companies are regulated and require licensing, while on-line gaming and betting have legal issues in some countries and are considered gambling,
2. Most on-line trading applications have sophisticated usability and a standard user interface mainly for informing the user of price changes, while the on-line gaming applications are rich in color, innovative formats and complex graphics.
3. Online Games have short-time durations, often less than 5 minutes per game, while on-line trading provide for longer durations and a position that can be held for an unlimited time.
4. The marketing efforts and client target segments also differ. The trading companies target and reach a financially educated audience (Day traders) and compete over trading costs and user functionality. The gaming industry aims at the less educated, addictive audience.

Several companies offer the ability to place bets on the outcome of different financial instruments, often referred to as financial spread/binary betting. Financial Spread betting gives investors the opportunity to trade on the financial markets without ever taking physical ownership of the underlying instrument. This means that the trader can speculate in the direction of any financial instrument, whether it is specific shares, currencies, commodities or indices without ever owning them. For example a trader can place a bet of $10 per point on the NASDAQ, and the bet is settled as the difference between the purchase and the sell price multiplied by $10. Most of these companies operate mainly in the UK, and are considered betting companies. In the US there is no regulation for betting companies. The user interface of these instruments is similar to on-line trading, mostly based on dynamic web-pages and has an informative look.

The present invention recognizes the similarities between the online gaming and the online trading industries, and addresses the need of users for simpler and more appealing graphic representation of the financial information.

The present invention also addresses the legal issues of the on-line gaming industry, and offers gamers a regulated financial alternative for their gaming needs.
References cited
Gaming *related*
3,980,307 - Stock market game apparatus
4,363,489 - Electronic stock market terminal game
5,139,269 - Financial game apparatus
5,934,674 - Stock market game
6,497,410 - Trading cards for an investment game, and game and method thereof
6,839,686 - Method and system for providing financial information and evaluating securities of a financial debt instrument
6,890,179 - interactive games for teaching financial principles
6,884,170 - Method and apparatus for graphical portraying gaming environment and information regarding components thereof.

A method and apparatus for providing a graphical representation of a gaming environment and for providing information regarding individual components located in the environment is provided. A graphical user interface displays a graphical representation of at least a portion of a gaming environment, such as a graphical representation of individual components of a gaming system and their surrounding physical environment. The components are graphically portrayed in positions corresponding to the relative positions of the actual components of the gaming system. By selecting a graphically represented component, information regarding the actual gaming system component which is represented is provided, such as by display in a window associated with the graphical user interface. Gaming system component or other information may be obtained via a communication link from those components.

Financial trading related prior art includes US Pat. No. 6,709,330, Stock Simulation Engine for an Options Trading Game, which discloses an options simulation engine for an options trading game. The present invention comprises a game engine for keeping track of game time and game settings, an options market simulator for providing a real-world options trading environment, and a portfolio manager engine for keeping track of a player's portfolio. The options market simulator comprises a basic stock price generator for moving stock prices, a news/rumor generator for moving stock prices, and an options pricing generator for pricing options. The portfolio manager comprises an available cash/minimum balance mechanism for determining how much a player is charged for buying and/or selling options and stocks, and for maintaining a player's positions, a risk analysis mechanism for determining the amount of money a player can lose for any given stock or option, a margin requirements mechanism for keeping track of the minimum equity required in a player's account to support the player's total investment position, a profit and loss mechanism for determining a player's profit and loss throughout the game and on a weekly basis, and a trading rules/limitations mechanism that prevents a player from breaking a trading rule or exceeding a limitation during game play.
Other prior art includes:
US Pat. No. 6,390,472, a Pseudo-Commodities Interactive Futures Trading Game;
US Pat. No. 6,347,307, a System and Method for Conducting Web-based Financial Transactions in Capital Markets; and
US Pat. No. 6,249,770, which discloses a Method and System of Financial Spreading and Forecasting.
US pat. Application No 20050197938 A System and Method for Determining Odds for Wagering in a Financial Market Environment. *This patent mainly discloses a* means to *protect the way of determining* odds.

US pat. Application No 20050027643 A System and Method for Wagering Based on the Movement of Financial Markets. This invention provides creation of financial-like instruments that are determined by casino games. I.e., a "stock" is created, wherein the price is determined by the movements of casino games.

### SUMMARY OF THE INVENTION

According to some embodiments of the present invention, a server may comprise a communication module which may be adapted to transmit to a client application actual financial data (e.g. information relating to the value or change in value of a commodity, financial instrument, currency, etc.) suitable for rendering an aspect of one or more gaming elements within a gaming environment generated by the client application, such as a gaming environment having the look and feel of a casino-like game or other games which may be wager related. Various rendered aspects of the gaming environment and gaming elements with the environment may be based on actual financial information relating to financial instruments such as, but not limited to, securities, currencies, commodities futures, or any derivative thereof. According to further embodiments of the present invention, the gaming environment may be any gaming environment known today or to be derived in the future, such as, but not limited to: slot machines; roulettes; dice games; racing; horse racing; card games; Black jack; and Poker.

According to some embodiments of the present invention, one or more of the gaming elements may be associated with one or more actual financial instruments, and the transmitted data may be derived from financial information associated with the at least one actual financial instrument According to further embodiments of the present invention, for different actual financial instruments different corresponding derivations of data may be used. For example: wherein the actual financial instrument is a currency, the transmitted data may be derived from a currency ratio exchange rates; wherein the actual financial instrument is a stock, the transmitted data may be derived from either an ask or a bid price relating to the stock; and so forth.

According to some embodiments of the present invention, the actual one or more financial instruments may be selected from, but is not limited to, a group comprising: traded securities; traded bonds; traded stocks; tradable financial derivatives; market indices (such as ASDAQ, FTSE, DOW ...); foreign exchange financial instruments comprising at least one of spot, forward and futures; and commodity financial instruments comprising at least one of spot, forward, and futures.

According to some embodiments of the present invention, the communication module may be adapted to transmit data related to one or more actual financial instruments, thereby providing a rendering aspect for one or more gaming elements associated with the one or more actual financial instruments, The transmitted data may comprise financial information describing any market data such as pricing, volume, ask/bid prices, market data indicators which are mathematical transformations of other market data, technical indicators which are the product of statistical predictions or suggestions, or any market data indicator of stocks, currencies, ratios, securities, derivatives or other financial instrument. Furthermore, it may be associated with a rendering aspect of the one or more gaming elements such as, but not limited to, screen position, velocity, shape and coloration. The client application may render the one or more gaming elements, or other aspects of the gaming environment, based on the information received from the server.

According to some embodiments of the present invention, the communication module may be further adapted to receive from the client application a detected user interaction, associated with a given gaming element which may in turn, initiate a transaction with the actual financial instrument with which the given gaming element is associated. The initiated transaction may be based on the detected interaction, wherein different detected interactions may correspond to different transactions.

According to some embodiments of the present invention, the gaming environment may comprise a game logic and a graphical user interface using graphics representation of financial information related to one or more of the actual financial instruments. The game logic may 'translate' the financial information from the actual financial one or more instruments, into rendered aspects of elements within the gaming environment. Furthermore, the game logic algorithms may 'translate' user interactions associated with given gaming elements or gaming elements' aspects into transaction initiation signaling adapted to initiate a transaction with a corresponding actual financial instruments with which the given elements or aspects are associated. The actual calculated financial outcome (e.g. Profit/Loss), from each transaction initiated by the user's interaction with the one or more gaming elements may be 'translated' into an improvement or deterioration of a gaming elements (e.g. horse in a race) position or condition within the gaming environment.

The term financial instrument is used to describe any financial security or derivative that might be traded on a financial exchange, for example company stocks or bonds, market indices (such as NASDAQ, FTSE, DOW...), commodities (Gold, Silver and other common and less common commodities), foreign exchange rates (EUR/USD, GBP/USD and any other currency pair).

The term financial information is used to describe the market data such as price, volume, ask/bid and any market data indicator of stocks, currencies, ratios, securities, derivatives and any other financial instrument.

The term financial game is used to describe a game logic and graphic representation of financial information of several financial instruments. The game logic includes the translation of the financial information to graphic elements, the algorithms and logic to translate the user game action to financial transactions, and the algorithm used for calculating the user Profit/Loss from the financial game.

It is an another object of some embodiments of the present invention to embody the concept of users playing a betting and/or casino game (racing, roulette, etc.), wherein the outcome is determined by the movements of financial markets (currencies, exchanges etc).

It is another object of some embodiments of the present invention to provide a graphically rich, colourful and engaging environment of the gaming world translated using computer algorithms to financial information and transactions.

It is a further object of some embodiments of the present invention to combine several financial instruments to create a very short time profit/Loss model, which depends on the movement of several securities. For example, one might assume that during the next trading minute the dollar will move higher relative several other currencies. The user can trade a short time trade on the dollar and gain any changes relative to other currencies in the following minute.

The present invention may include various methods and systems for graphically representing a gaming environment using financial information. Optional and alternative embodiments of the present invention include methods and systems for providing transaction tools that create financial transactions through graphical representation of the gaming environment.

An embodiment of the invention may include a graphical user interface for displaying a graphical representation of financial information in a gaming environment, such as horse racing, slot machines, roulette sport betting, card games or any other known or new gaming system.

An embodiment of the invention may include a module to calculate the evaluation of fixed micro-time scaled (such as 1, 5, 10, 15 minutes and more) options to evaluate the risk of the trade and the commission and margin level of the user. For example, consider an option for buying $100K EUR/USD Spot for 1 minute at market prices. Since the user takes the risk for only 1 minute, its premium should be lower than a regular long-term position.

An embodiment of the invention may include a financial server to collect, the transactions of the financial game. The financial server can then be used to aggregate the order flow of the financial transactions and remove opposite trades (a buy and sell transaction of the same financial instrument can be disregarded), to reduce the actual financial transactions costs for the company.

The invention may also include computer algorithms for translating financial information to graphic coordinates and parameters that can then be displayed as a game on a graphical user interface (GUI), The system receives user actions related to the game, then translates the user game actions into financial transactions and sends these transactions to a financial transaction server for execution.

In an exemplary embodiment, the game graphics and application reside on the user computer, and send specific commands to the financial-gaming server game over a communications link, such as a voice protocol network (VPN), a dial-up modem, the Internet or any communication link between the user computer and the financial-gaming server.

A few financial games are described below as non-limiting examples:

**Forex Racing:** The game has a horse racing look and feel with each horse representing a country's specific currency (Dollar $, Euro E, GBP, etc.). The race starts at a specific time and all the horses (currencies) are at the same starting point. When the race starts the movement of each horse is related to the relative currency movement. For example if the USD rose during the game in relation to all other currencies, then the USD horse will be leading the race. The game players can bet on which horse will win, or on the order of the winning horses (first second and third places). After choosing their bet they can watch displays of their possible gains from their bet and the bet cost.

The game action is then translated to a market position using unique algorithms that hedge the player bet to options on the currencies. When the race ends the winners are announced, and the profit/loss is calculated and announced to all the game participants.
For example, a forex race can have the following attributes:
1. Currencies in the game (for example USD, EUR and GBP)
2. Duration of the Race (for example 1 minute).
3. The user can select the amount he wants to trade on the financial game (for example $100) and currencies he thinks will win the race (for example, the USD).

The user action can then be translated to a financial transaction that will correspond with the user selection: For example, sell $20K of EUR/USD Spot for 1.2000 (the market Bid quote), and sell $20K GBP/USD for 1.7000. The total amount is $100K, which represents a 1:400 margin that the race offers (some foreign exchange brokers offer margins of 1:400 in their on-line trading). The commissions of the transaction can be deducted from the user amount.
During the race, the user can see the 3 horses that represent USD, EUR and GBP move in correspondence to the movement of the currency rates. The user can also view the profit changing during the race that corresponds to his trade and the current prices of the financial transactions. At the end of the race, for example, if the EURIUSD ask price is 1.2005, and the GBP ask price is 1.7005, then the user has a profit of 0.0005*20K +0.0005*20K =$20. The user account balance is then awarded $20. The user can select different races on different currencies, and different race durations. User actions can be accepted at the beginning of the race or during the race.

The horse race can also be represented in any other racing form, such as greyhounds, race cars or any other suitable racing appearance. The horses can also represent any other financial instrument such as companies' stocks, which can be hedged using stock options, or different commodities. A virtual race can represent any possible relation between various securities.

Another example of a financial game can be **Stock_Machlne_or_Forex Machine:** The game looks like a typical virtual Slot machine, where each symbol is replaced either by a currency or a company Symbol. Each reel is defined to have a different set of symbols. Certain combinations of two or more identical symbols that come to a stop at the horizontal line are defined as a winning bet. For example, one reel can represent food industry companies, another represents technological companies and the third represents apparel companies. A match is defined prior to the game and the reels stops at the highest mover during the spinning time of the machine. Again, winning bets and odds are calculated prior to the game, and the different possibilities of the game are numerous.

Another example of a financial game can be **Market/Forex Roulette:** The game looks like a Casino roulette game. It can have any amount of numbers or 37 just as in a real roulette. Each number corresponds to a financial instrument or a combination of several financial instruments. The roulette wheel starts to spin, financial instrument price changes during the duration of the game are monitored and the wheel stops at the number that rose the most during the spinning time. For example if the roulette wheel has stocks illustrated on the table such as Microsoft, IBM, Apple, etc., and during the spin of the wheel Microsoft's Stock went up the most then, the ball stops on the Microsoft symbol or number and Microsoft stock is considered the winning number. The winning bets are distributed according to the financial prices of the underlying securities at the end of the game.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:

Fig. 1 is a flow diagram graphically representing an exemplary gaming environment and translating the gaming graphics and actions to financial information and transaction;

Fig. 2 is an exemplary system architecture diagram representing how multiple clients can play multiple games, deposit money and make transactions;

Fig. 3 is an exemplary graphic display of a GUI of a horse racing game that relates to the changes in several currencies; and

Fig. 4 is an exemplary graphic display a GUI of a slot machine that relates to the movement in prices of several stocks.

### DETAILED DESCRIPTION OF AN EXEMPLARY EMBODIMENT

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Terms in this application relating to distributed data networking, such as send or receive, may be interpreted in reference to **Internet protocol suite,** which is a set of communications protocols that implement the protocol stack on which the Internet and most commercial networks run. It has also been referred to as the TCP/IP protocol suite, which is named after two of the most important protocols in it: the Transmission Control Protocol (TCP) and the Internet Protocol (IP), which were also the first two networking protocols defined. Today's IP networking represents a synthesis of two developments that began in the 1970s, namely LANs (Local Area Networks) and the Internet, both of which have revolutionized computing.

The Internet Protocol suite-like many protocol suites-can be viewed as a set of layers. Each layer solves a set of problems involving the transmission of data, and provides a well-defined service to the upper layer protocols based on using services from some lower layers. Upper layers are logically closer to the user and deal with more abstract data, relying on lower layer protocols to translate data into forms that can eventually be physically transmitted. The TCP/IP reference model consists of four layers.

### Layers in the Internet Protocol suite

The IP suite uses encapsulation to provide abstraction of protocols and services. Generally a protocol at a higher level uses a protocol at a lower level to help accomplish its aims. The Internet protocol stack has never been altered, by the IETF, from the four layers defined in RFC 1122. The IETF makes no effort to follow the seven-layer OSI model and does not refer to it in standards-track protocol specifications and other architectural documents.

| | |
|---|---|
| | DNS, TFTP, TLS/SSL, FTP, Gopher, HTTP, IMAP, IRC, NNTP, POP3, SIP, SMTP, SNMP, SSH, TELNET, ECHO, RTP, PNRP, rlogin, ENRP |
| 4. Application | |
| | Routing protocols like BGP, which for a variety of reasons run over TCP, may also be considered part of the application or network layer. |
| 3. Transport | |
| | TCP, UDP, DCCP, SCTP, IL, RUDP |
| | |
| | Routing protocols like OSPF, which run over IP, are also to be considered part of the network layer, as they provide path selection. ICMP and IGMP run over IP and are considered part of the network layer, as they provide control information. |
| 2. Internet | |
| | IP (IPv4, IPv6) |
| | |
| | ARP and RARP operate underneath IP but above the link layer so they belong somewhere in between. |
| | |
| 1.Network access | Ethernet, Wi-Fi, token ring, PPP, SLIP, FDDI, ATM, Frame Relay, SMDS |

Some textbooks have attempted to map the Internee Protocol suite model onto the seven layer OSI Model. The mapping often splits the Internet Protocol suite's Network access layer into a Data link layer on top of a Physical layer, and the Internet layer is mapped to the OSI's Network layer, These textbooks are secondary sources that contravene the intent of RFC1122 and other IETF primary sources. The IETF has repeatedly stated that Internet protocol and architecture development is not intended to be OSI-compliant.

RFC3439, on Internet architecture, contains a section entitled: "Layering Considered Harmful": Emphasizing layering as the key driver of architecture is not a feature of the TCP/IP model, but rather of OSI. Much confusion comes from attempts to force OSI-like layering onto an architecture that minimizes their use.

Today, most commercial operating systems include and install the TCP/IP stack by default. For most users, there is no need to look for implementations. TCP/IP is included in all commercial Unix systems, Mac OS X, and all free-software Unix-like systems such as Linux distributions and BSD systems, as well as Microsoft Windows.

Unique implementations include Lightweight TCP/IP, an open source stack designed for embedded systems and KA9Q NOS, a stack and associated protocols for amateur packet radio systems and personal computers connected via serial lines.

According to some embodiments of the present invention, mobile devices may connect with and access data from an enterprise data system over a communication network at some portion of which may be a wireless network. While the term wireless network may technically be used to refer to any type of network that is wireless, the term is most commonly used to refer to a telecommunications network whose interconnections between nodes is implemented without the use of wires, such as a computer network (which is a type of communications network). Wireless telecommunications networks are generally implemented with some type of remote information transmission system that uses electromagnetic waves, such as radio waves, for the carrier and this implementation usually takes place at the physical level or "layer" of the network. (For example, see the Physical Layer of the OSI Model). Various wireless technologies and standards existing, including:
1. Global System for Mobile Communications (GSM): The GSM network is divided into three major systems which are the switching system, the base station system, and the operation and support system (Global System for Mobile Communication (GSM)). The cell phone connects to the base system station which then connects to the operation and support station; it then connects to the switching station where the call is transferred where it needs to go (Global System for Mobile Communication (GSM)), This is used for cellular phones, is the most common standard and is used for a majority of cellular providers.
2. Personal Communications Service (PCS): PCS is a radio band that can be used by mobile phones in North America. Sprint happened to be the first service to set up a PCS.
3. D-AMPS: D-AMPS, which stands for Digital Advanced Mobile Phone Service, is an upgraded version of AMPS but it is being phased out due to advancement in technology. The newer GSM networks are replacing the older system.
4. Wireless MAN - metropolitan area network.
5. Wireless LAN - local area networks.
6. Wireless PAN - personal area networks.
7. GSM - Global standard for digital mobile communication, common in most countries except South Korea and Japan.
8. PCS - Personal communication system - not a single standard, this covers both CDMA and GSM networks operating at 1900 MHz in North America.
9. Mobitex - pager-based network in the USA and Canada, built by Ericsson, now used by PDAs such as the Palm VII and Research in Motion BlackBerry.
10. GPRS - General Packet Radio Service, upgraded packet-based service within the GSM framework, gives higher data rates and always-on service.
11. UMTS - Universal Mobile Telephone Service (3rd generation cell phone network), based on the W-CDMA radio access network.
12. AX.25 - amateur packet radio.
13. NMT - Nordic Mobile Telephony, analog system originally developed by PTTs in the Nordic countries.
14. A-M-PS - Advanced Mobile Phone System introduced in the Americas in about 1984.
15. D-AMPS - Digital AMPS, also known as TDMA.
16. Wi-Fi - Wireless Fidelity, widely used for Wireless LAN, and based on IEEE 802.11 standards.
17. Wimax - A solution for BWA (Broadband Wireless Access) and conforms to IEEE 802.16 standard.
18. Canopy - A wide-area broadband wireless solution from Motorola.

The principles and operation of a method and a system according to the present invention may be better understood with reference to the drawings and the accompanying description, it being understood that these drawings are given for illustrative purposes only and are not meant to be limiting.

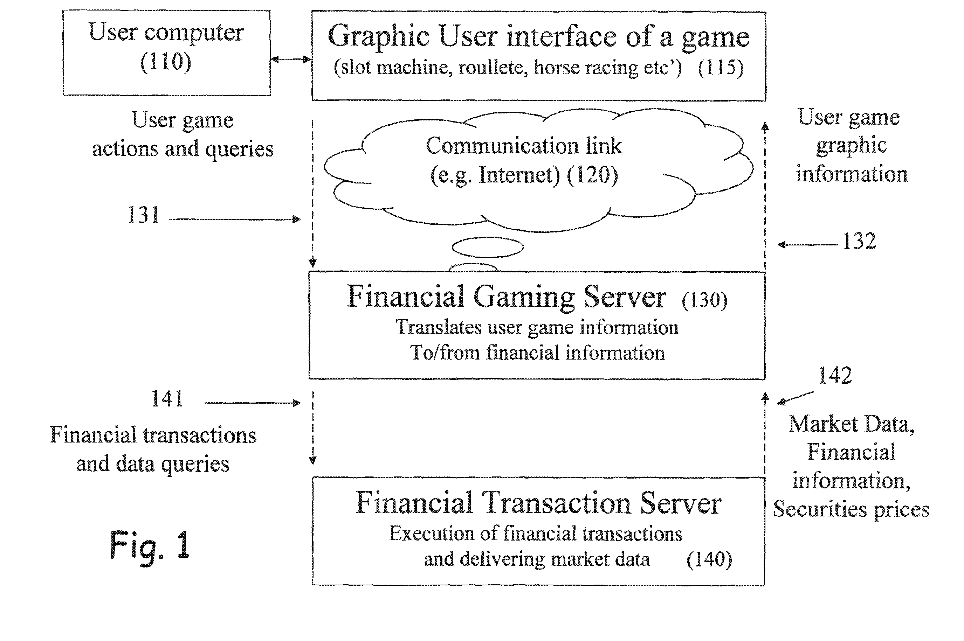

Fig. 1 is a flow diagram graphically representing a gaming environment and translation of the gaming graphics and actions to financial information and transactions. The graphic user interface (GUI) 115 of a user computer 110 displays a game, such as a slot, roulette or horse racing. User computer 110 communicates via the Internet 120, for example, sending user game actions and queries 131 to a financial gaming server 130, and receiving user game graphic information 132 from financial game server 130. Financial game server 130 thus translates user game information into and from financial information. Financial game server 130 is also in communication with a financial transaction server 140, sending financial transactions 141 and receiving market data, financial information and securities prices 142, for example. Financial transaction server 140 thus executes financial transactions 141 and delivers market data, etc. 142.

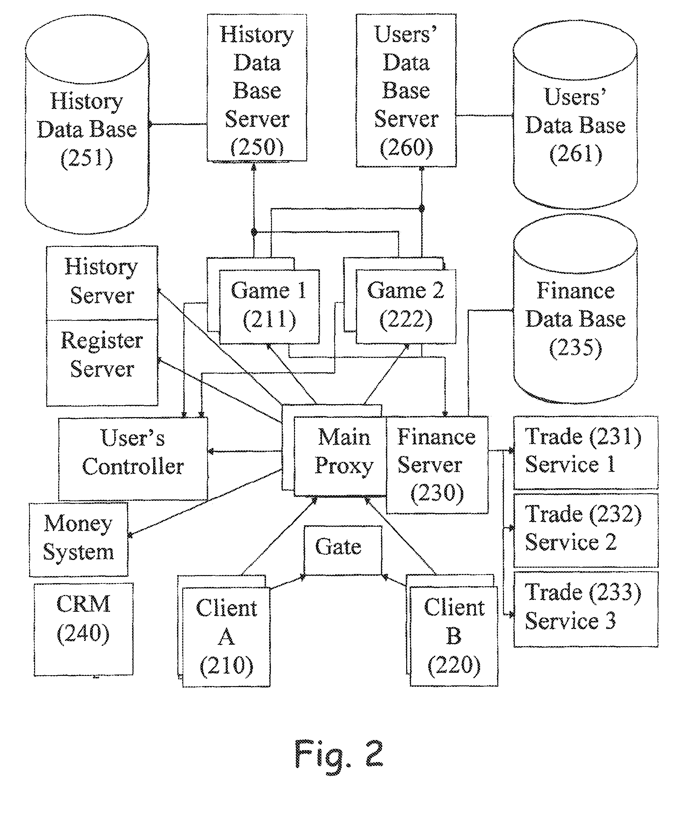

Fig. 2 is a system architecture diagram representing how multiple clients can play multiple games, deposit money and make transactions. Two clients 210 and 220 are simultaneously playing game 1 211 and game 2 222, respectively. A financial server 230 coordinates games 211 and 22 with trade services 231-233 and a financial data base 235. A customer relations management 240 operates a call center having access to a history data base server 250, a history data base 251, a user's data base server 260 and a user's data base 261.

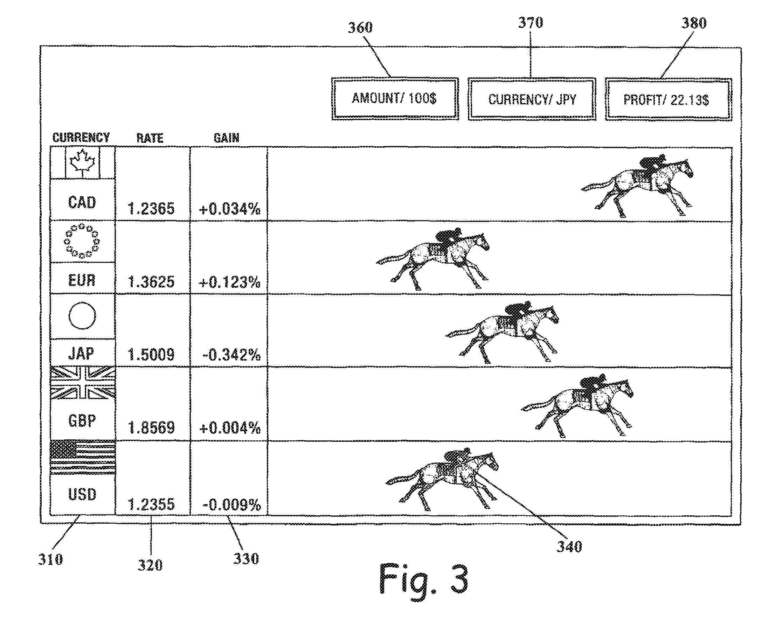

Fig. 3 is an exemplary graphic display of a GUI of a horse racing game that relates to the rate changes of several currencies. Exchange rate change is shown for various currencies 320 with corresponding flags 310 and gain values 330. A horse and jockey 340 are shown moving from left to right. The distance from left to right is proportional to the appropriate exchange rate. The initial amount of investment 360 is shown with the user's selected currency 370 and the current profit 380.

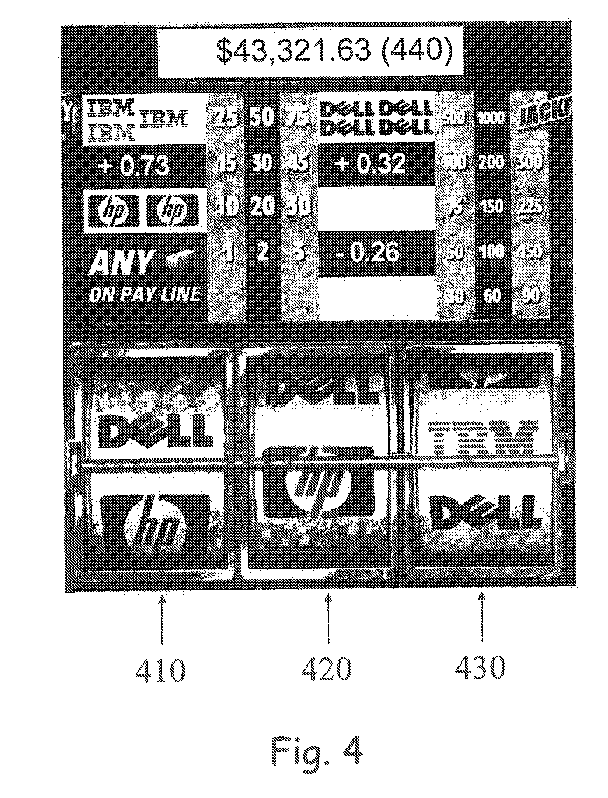

Fig. 4 is an exemplary graphic display of a GUI of a slot machine that relates to the movement in prices of several stocks. The three wheels each show logos for Hewlitt-Packard 410, IBM 420 and DELL 430. A window at the top shows a jackpot amount 440.

It is to be understood that the phraseology and terminology employed herein are for the purpose of description, and should not be regarded as limiting,

It is important, therefore, that the scope of the invention is not construed as being limited by the illustrative embodiments set forth herein. Other variations are possible within the scope of the present invention as defined in the appended claims and their equivalents.

According to an exemplary embodiment there are provided an apparatus method and system for procuring and analyzing information regarding the financial markets. According to further embodiments of the present invention, there may be provided a system to execute financial transactions using internet-based frontend graphics that resembles wagering games. The system may provide a comprehensive combination of financial information and transactions in a format that facilitates known and new casino/betting like frontend graphics.

## Claims

1. A server comprising:
a communication module adapted to transmit to a client application data suitable for rendering an aspect of each of one or more gaming element within a gaming environment, wherein each of the one or more gaming elements is associated with at least one actual financial instrument, and wherein the transmitted data is derived from financial information associated the at least one actual financial instrument.

2. The server according to claim 1, wherein the transmitted data is associated with a rendering aspect of the one or more gaming elements selected from the group consisting of screen position, velocity, shape and coloration.

3. The server according to claim 2, wherein said communication module is adapted to transmit data related to each of at least two actual financial instruments, thereby providing a rendering aspect for each gaming element associated with each of the at least two actual financial instruments.

4. The server according to claim 3, wherein the rendered aspect of each of the gaming element is selected from the group consisting of relative screen position, relative velocity, shape and coloration.

5. The server according to one of claims 2 to 4, wherein the transmitted data is derived from pricing of the at least one financial instrument; and/or wherein the transmitted data is derived from ask/bid prices of the at least one financial instrument; and/or wherein the transmitted data is derived from a market data indicator which is a mathematical transformations of pricing relating to the at least one actual financial instrument, and or wherein the transmitted data is derived from a technical indicator which is a statistical prediction/suggestion for the future pricing movement relating to the at least one actual financial instrument.

6. The server according to one of claims 1 to 5, wherein the actual financial instrument is selected from the group consisting of: a traded security; a traded bond; a traded stock; a tradable financial derivative; a foreign exchange financial instrument comprising at least one of spot, forward and futures; and a commodity financial instruments comprising at least one of spot, forward, and futures.

7. The server according to claim 6, wherein the actual financial instrument is a currency and the transmitted data is derived from a currency ratio.

8. The server according to claim 6, wherein the actual financial instrument is a stock, and the transmitted data is derived from either an ask or a bid price relating to the stock.

9. A method of facilitating a transaction comprising:
transmitting to a client application data suitable for rendering an aspect of each of one or more gaming element within a gaming environment, wherein each of the one or more gaming elements is associated with at least one actual financial instrument, and wherein the transmitted data is derived from financial information associated the at least one actual financial instrument.

10. The method according to claim 9, wherein the transmitted data is associated with a rendering aspect of the one or more gaming elements selected from the group consisting of screen position, velocity, shape and coloration.

11. The method according to claim 10, wherein said communication module is adapted to transmit data related to each of at least two actual financial instruments, thereby providing a rendering aspect for each gaming element associated with each of the at least two actual financial instruments.

12. The method according to claim 11, wherein the rendered aspect of each of the gaming element is selected from the group consisting of relative screen position, relative velocity, shape and coloration.

13. The method according to one of claims 10 to 12, wherein the transmitted data is derived from pricing of the at least one financial instrument.

14. The method according to claim 13, wherein the transmitted data is derived from ask/bid prices of the at least one financial instrument.
